# EUROPEAN PATENT APPLICATION

(11) **EP 4 826 222 A1**
(43) Date of publication of application: **21.10.2026**
(21) Application number: 26170843.2
(22) Date of filing: 07.04.2026
(51) Int. Cl.: F01D 25/34, F01D 25/28, F01D 5/02

(54) **ROTOR TURNING APPARATUS FOR A STEAM TURBINE GENERATOR**

(30) Priority: 07.04.2025 SA 125003675
(71) Applicant: Saudi Electricity Company, 13342 Riyadh (SA)
(72) Inventor: ALFAIFI, NAIF AHMED YAHYA, AL Shaqiq (SA); BAYDHI, YAHYA MOHAMMED, AL Shaqiq (SA); ALASMARI, JABER IBRAHIM, AL Shaqiq (SA)
(74) Representative: Lapienis, Juozas

(57) **Abstract**

The present disclosure discloses a rotor turning apparatus for turning a rotor of a steam turbine generator comprising a pneumatic motor and a fixture assembly which frictionally engages with an outer surface of a gear assembly of a steam turbine generator, and which frictionally engages with an outer surface of the pneumatic motor. When the fixture assembly is in the clamped configuration, the pneumatic motor is mechanically coupled to the gear assembly of the steam turbine generator, such that the pneumatic motor is able to turn a rotor of the steam turbine generator via the gear assembly.

## Description

### FIELD

The present disclosure relates to a rotor turning apparatus for turning a rotor of a steam turbine generator. More particularly, but not exclusively, the present disclosure relates to a rotor turning apparatus comprising a pneumatic motor and a fixture assembly.

### BACKGROUND

Background description includes information that will be useful in understanding the present invention. It is not an admission that any of the information provided herein is prior art or relevant to the presently claimed invention, or that any publication specifically or implicitly referenced is prior art.

Steam turbine generators are pieces of industrial equipment that extract work from high-pressure steam. The steam turbine generators (STGs) use the steam to turn rotors to generate electricity.

There are occasions during the lifetime of a STG where the STG needs to be shutdown. For example, the STG may need to be shutdown for maintenance, or if a fault has been identified then an emergency shutdown may be required.

During ordinary operations, the rotor of the STG turns at approximately 3000 revolutions per minute (rpm). The internal temperature of the STG is typically in the range of 400 to 700°C.

During shutdown operations, the rotation speed of the STG needs to be reduced, in addition to the temperature. To avoid damage to the internal parts of the STG, the rotor cannot be stopped immediately while the STG remains at elevated temperature. For this reason, systems are employed in a stage-wise manner, to gradually reduce rotation speed while reducing the temperature of the STG.

These systems typically take the temperature of the STG down to around 130°C and a rotation speed of about 16 rpm. At this stage, a turning gear engages with the shaft of the STG rotor, to maintain the rotation speed while the STG continues to cool down.

However, there are occasions where the turning gear fails to engage with the shaft of the rotor. Since it is important that the rotor continues to turn, manual rotation is employed by a maintenance team to keep the rotor turning.

This manual work is exhausting for the maintenance team, which is typically only capable of maintaining a rotation speed of about 4 rpm. This stage of the shutdown process may take up to around 12 hours. Therefore, members of the maintenance team operate in shifts continuously to ensure that the rotor is continuously turning during this stage of the shutdown process. Typically, approximately five workers would be needed to coordinate the effort. This is inefficient use of time and expertise, and time-consuming. Additionally, manual rotation of the rotor is dangerous due to the still elevated temperatures of the STG, which poses a risk to the health and safety of the maintenance team.

The present disclosure seeks to mitigate one or more of the abovementioned problems. More particularly, but not exclusively, the present disclosure seeks to provide a rotor turning apparatus for a steam turbine generator.

### SUMMARY

According to a first aspect of the present disclosure, there is provided a rotor turning apparatus for turning a rotor of a steam turbine generator. The apparatus comprises a pneumatic motor and a fixture assembly. The fixture assembly comprises a first clamp, the first clamp comprising a first pair of hemispherical portions; and a second clamp, the second clamp comprising a second pair of hemispherical portions. An inner radius of the first pair of hemispherical portions is sized so that an inner surface of the first clamp is configured to frictionally engage with an outer surface of a gear assembly of a steam turbine generator, when the fixture assembly is in a clamped configuration. An inner radius of the second pair of hemispherical portions is sized so that an inner surface of the second clamp is configured to frictionally engage with an outer surface of the pneumatic motor, when the fixture assembly is in the clamped configuration. When the fixture assembly is in the clamped configuration, the pneumatic motor is mechanically coupled to the gear assembly of the steam turbine generator, such that the pneumatic motor is able to turn a rotor of the steam turbine generator via the gear assembly.

Advantageously, the fixture assembly being sized to accommodate the gear assembly and the pneumatic motor enables the pneumatic motor to be fixed to the gear assembly when in use.

The use of a pneumatic motor removes the need for manual rotation of the rotor of the steam turbine generator when the gear assembly does not engage with the shaft of the rotor of the steam turbine generator during a planned or unplanned shutdown process.

The rotor turning apparatus may be retrofittable to the gear assembly.

By having a device that is retrofittable, it only needs to be deployed when needed. This makes maintenance of the apparatus more straightforward and reliable, by only requiring maintenance of a set of retrofittable apparatus. This also reduces the number of apparatus that would need to be on stand-by.

The pneumatic motor may be configured to turn a shaft of the rotor of the steam turbine generator, via the gear assembly.

The rotor of the steam turbine generator may have a shaft. The shaft may be coupled to the gear assembly.

The pneumatic motor may comprise a flexible air hose, wherein the flexible air hose facilitates the transport of air to the pneumatic motor.

The use of a flexible air hose allows pressurised air to be fed to the pneumatic motor. The air hose being flexible enables compact and safe stowing of the air hose when not in use.

The pneumatic motor may be configured to turn the rotor of the steam turbine generator at a rotation speed of between 0 and 16 revolutions per minute (rpm).

When the rotation speed of the rotor has been reduced from normal operating speeds down to about 16 rpm, the gear assembly activates to maintain the rotation speed of the rotor while the steam turbine generator cools down. Manual rotation of the rotor typically is only able to manage about 4 rpm. The use of the pneumatic motor to drive the gear assembly and the rotor enables rotation of the rotor at optimal speeds during that stage of the shutdown process.

The pneumatic motor may comprise a pressure regulator.

The pressure regulator may indicate a magnitude of air pressure within the pneumatic motor.

This enables the control of the pressure in the pneumatic motor, to control the rotation speed of the pneumatic motor and thereby control the speed of the rotor.

The pneumatic motor may comprise an air compressor connected to a first end of the flexible hose, and wherein the pneumatic motor is connected to a second end of the flexible hose.

The air compressor may be a diesel compressor.

Diesel compressors are reliable, and do not rely on external sources of power, such as electricity. Therefore, in some unplanned shutdowns, where electrical power may be compromised, the use of a diesel compressor adds a layer of redundancy, improving the resilience and safety of the system.

The fixture assembly may comprise a connecting portion, wherein the connecting portion fixedly connects an upper hemispherical portion of the first pair of hemispherical portions and an upper hemispherical portion of the second pair of hemispherical portions.

The connecting portion may be an upper connecting portion. The fixture assembly may comprise a lower connecting portion, wherein the lower connecting portion rigidly connects a lower hemispherical portion of the first pair of hemispherical portions and a lower hemispherical portion of the second pair of hemispherical portions.

Having the fixture assembly divided into two sections, each section having a pair of first and second upper and lower hemispherical portions respectively, enables the fixture assembly to be opened and clamped around the gear assembly and the pneumatic motor. It also enables the fixture assembly to be used with gear assemblies and pneumatic motors of different widths, and with a tolerance for different sized apparatus.

One or both of the upper connecting portion or the lower connecting portion may comprise a connecting arm.

Each of the upper connecting portion and the lower connecting portion may comprise a plurality of connecting arms.

The connecting arms may rigidly connect the first upper hemispherical portion to the second upper hemispherical portion. The connecting arms may rigidly connect the first lower hemispherical portion to the second lower hemispherical portion.

The upper hemispherical portion of the first pair of hemispherical portions, the upper hemispherical portion of the second pair of hemispherical portions, and the upper connecting portion, may form an upper section of the fixture assembly.

The lower hemispherical portion of the first pair of hemispherical portions, the lower hemispherical portion of the second pair of hemispherical portions, and the lower connecting portion, may form a lower section of the fixture assembly.

The upper section of the fixture assembly and the lower section of the fixture assembly may be movable relative to each other.

The upper section of the fixture assembly and the lower section of the fixture assembly may be separable.

Having an upper and lower section of the fixture assembly movable relative to each other enables the upper and lower section to be separable and clamped around the gear assembly and the pneumatic motor. This enables the fixture assembly to snugly fit against the gear assembly and the pneumatic motor, ensuring a strong connection.

Each hemispherical portion may comprise a pair of flanges.

The pair of flanges of the upper hemispherical portion of the first pair of hemispherical portions may be arranged to align with the pair of flanges of the lower hemispherical portion of the first pair of hemispherical portions.

The first pair of hemispherical portions may comprise a pair of threaded members, each threaded member being arranged to pass through each of the aligned flanges, such that the fixture assembly can be moved between the clamped configuration and an unclamped configuration.

The threaded portions may connect the respective flanges. The threaded portions may be able to be unscrewed completely from the flanges, enabling the upper and lower section of the fixture assembly to be separable.

In the unclamped configuration, the upper and lower sections of the fixture assembly may not be separated. In the unclamped configuration, the upper and the lower sections of the fixture assembly may be held apart by a gap determined by the threaded members. In the unclamped configuration, the gap may be such that the fixture assembly has an internal diameter greater than the external diameter of either the gear assembly or the pneumatic motor, enabling the fixture assembly to slide on or off from the gear assembly or the pneumatic motor.

In the clamped configuration, the upper and lower sections of the fixture assembly may by brought together by the threaded portions so that the hemispherical portions frictionally engage with the external surfaces of the gear assembly and the pneumatic motor respectively. In the clamped configuration, the gear assembly, the fixture assembly, and the pneumatic motor may be spatially fixed relative to each other.

The threaded portions enable tightening of the gap between the respective flanges, so that a tight fit of the hemispherical portions against the gear assembly and the pneumatic motor can be achieved.

The pair of flanges of the upper hemispherical portion of the second pair of hemispherical portions may be arranged to align with the pair of flanges of the lower hemispherical portion of the second pair of hemispherical portions.

The second pair of hemispherical portions may comprise a pair of threaded members, each threaded member being arranged to pass through each of the aligned flanges, such that the fixture assembly can be moved between the clamped configuration and the unclamped configuration.

There is provided, according to a second aspect of the present disclosure, a method of turning a rotor of a steam turbine generator. The method comprises: tightening a first pair of hemispherical portions of a fixture assembly towards frictional engagement with an outer surface of a gear assembly of the steam turbine generator, wherein the gear assembly is coupled to the rotor of the steam turbine generator; coupling a pneumatic motor to the gear assembly; tightening a second pair of hemispherical portions of the fixture assembly towards frictional engagement with an outer surface of the pneumatic motor, such that the pneumatic motor is spatially fixed relative to the gear assembly; and feeding compressed air through the pneumatic motor coupled to the gear assembly, thereby causing the rotor of the steam turbine generator to turn.

It will be appreciated that features disclosed in one aspect of the present disclosure may be applicable to another aspect of the present disclosure, and vice-versa.

### BRIEF DESCRIPTION OF THE DRAWINGS

The manner in which the above-recited features of the present invention is understood in detail, a more particular description of the invention, briefly summarized above, may be had by reference to embodiments, some of which are illustrated in the appended drawings. It is to be noted, however, that the appended drawings illustrate only typical embodiments of the present disclosure and are therefore not to be considered limiting of its scope, for the present disclosure may admit to other equally effective embodiments.
**Fig. 1A** shows a perspective view of the rotor turning apparatus in the unclamped configuration according to an embodiment of the present disclosure.
**Fig. 1B** shows a perspective view of the rotor turning apparatus in the clamped configuration according to an embodiment of the present disclosure.
**Fig. 2** shows a perspective view of the fixture assembly according to an embodiment of the present disclosure.
**Fig. 3A** shows a side view of the rotor turning apparatus in the clamped configuration according to an embodiment of the present disclosure.
**Fig. 3B** shows a front view of the rotor turning apparatus in the clamped configuration according to an embodiment of the present disclosure.
**Fig. 3C** shows a plan view of the rotor turning apparatus in the clamped configuration according to an embodiment of the present disclosure.
**Fig. 3D** shows a rear view of the rotor turning apparatus in the clamped configuration according to an embodiment of the present disclosure.

The foregoing and other objects, features and advantages of the present invention, as well as the invention itself, will be more fully understood from the following description of preferred embodiments, when read together with the accompanying drawings.

### DETAILED DESCRIPTION

The present disclosure relates to the field of a rotor turning apparatus for turning a rotor of a steam turbine generator.

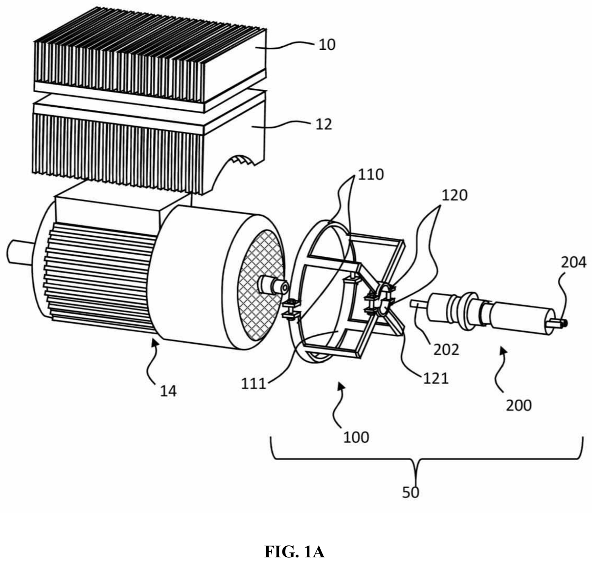

The principles of the present disclosure and their advantages are best understood by referring **to** **Fig. 1A to Fig. 3D****.** In the following detailed description of illustrative or exemplary embodiments of the disclosure, specific embodiments in which the disclosure may be practiced are described in sufficient detail to enable those skilled in the art to practice the disclosed embodiments. The following detailed description is, therefore, not to be taken in a limiting sense, and the scope of the present disclosure is defined by the appended claims and equivalents thereof. References within the specification to "one embodiment", "an embodiment", "embodiments" or "one or more embodiments" are intended to indicate that a particular feature, structure, or characteristic described in connection with the embodiment is included in at least one embodiment of the present disclosure.

**Fig. 1A** shows a rotor turning apparatus 50 in the unclamped configuration according to an embodiment of the present disclosure.

A steam turbine generator (STG) has a gear assembly 14 connected to it, to drive the rotor of the STG (not shown) when in a shutdown process. The gear assembly 14 has a gear assembly cooler 10, 12, that cools the turning gear assembly when in use by absorbing and radiating heat.

The rotor turning apparatus 50 comprises a fixture assembly 100 and a pneumatic motor 200.

The fixture assembly 50 has a first clamp 110 and a second clamp 120. The first clamp 110 has an inner surface 111 that has a radius that is sized to match an outer radius of the gear assembly 14. The inner surface 111 of the first clamp 110 is configured to frictionally engage with the outer surface of the gear assembly 14 when the fixture assembly 100 is in the clamped configuration.

The first clamp 110 comprises a first pair of hemispherical portions and the second clamp 120 comprises a second pair of hemispherical portions.

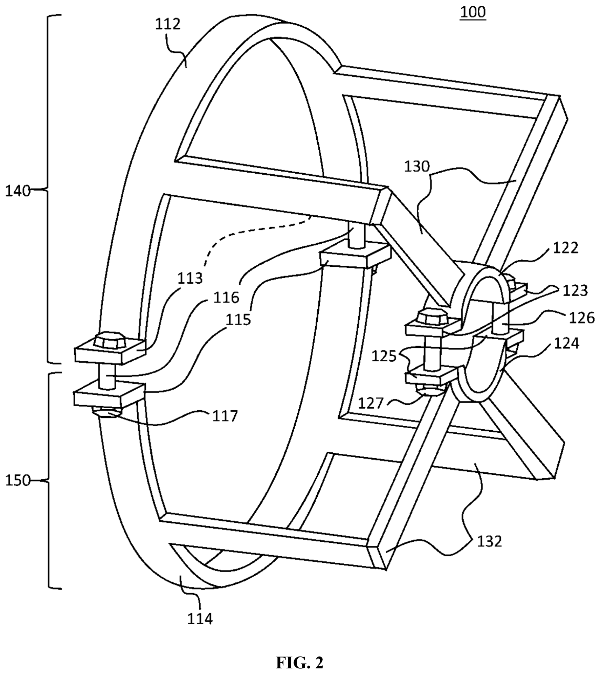

The second clamp 120 has an inner surface 121 that has a radius that is sized to match an outer radius of the pneumatic motor 200. The inner surface 121 of the second clamp 120 is configured to frictionally engage with the outer surface of the pneumatic motor 200 when the fixture assembly 100 is in the clamped configuration. The fixture assembly is described in more detail in **Fig. 2****.**

The pneumatic motor 200 comprises a rotation bit 202. The rotation bit 202 engages with the gear assembly 14 to drive the rotor of the STG. By using the pneumatic motor, the need to use humans to manually rotate the rotor of the STG is removed, saving time and improving safety.

The pneumatic motor 200 also comprises a flexible air hose 204. The flexible air hose 204 supplies pressurized air to the pneumatic motor 200, which is needed to drive the rotation bit 202. The source of the pressurized air for the pneumatic motor 200 is a diesel compressor (not shown). The use of a diesel compressor enhances the resilience of the system to power outages, for example.

When in the unclamped configuration as shown in this figure, both the first clamp 110 comprising the first pair of hemispherical portions and the second clamp 120 comprising the second pair of hemispherical portions are not in frictional engagement with an outer surface of the gear assembly 14 or an outer surface of the pneumatic motor 200 respectively. The pneumatic motor 200 is also not engaged with the gear assembly 14.

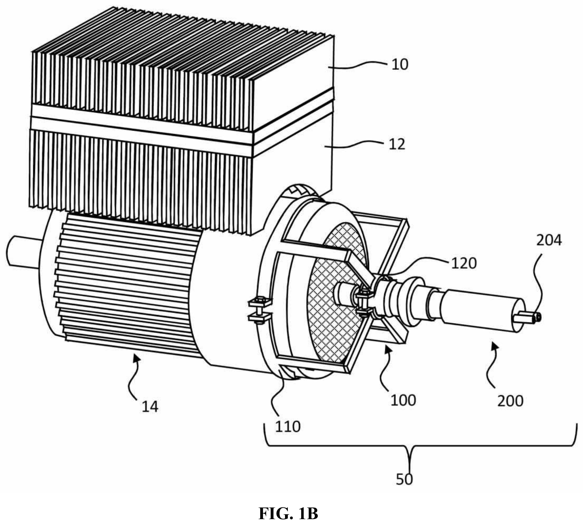

**Fig. 1B** shows a rotor turning apparatus 50 in the clamped configuration.

For the sake of clarity and conciseness, only the differences between this figure and the embodiment of **Fig. 1** will be described. In embodiments, like reference numerals denote similar elements.

The rotor turning apparatus 50 is in the clamped configuration. The first clamp 110 has both of its hemispherical portions tight and in frictional engagement with an outer surface of the gear assembly. The second clamp 120 has both of its hemispherical portions tight and in frictional engagement with an outer surface of the pneumatic motor 200.

The rotation bit 202 of the pneumatic motor 200 is engaged and coupled to the gear assembly 14, so that the pneumatic motor can turn a rotor of the STG via the gear assembly.

By having both of the gear assembly 14 and the pneumatic motor 200 clamped together by the fixture assembly 100 in the clamped configuration, the pneumatic motor 200 is fixed in place relative to the fixture assembly 100 and the gear assembly. This ensures that the coupling between the rotation bit 202 and the gear assembly is strong and resistant to disturbances such as vibrations.

**Fig. 2** shows a fixture assembly according to an embodiment of the present disclosure.

The fixture assembly has an upper section 140 and a lower section 150. The upper section 140 comprises a first upper hemispherical portion 112, a second upper hemispherical portion 122, and an upper connecting portion 130.

The upper connecting portion comprises a pair of arms 130 comprising a 90-degree bend, each arm connecting the first upper hemispherical portion 112 to the second upper hemispherical portion 122.

In embodiments, the upper connecting portion is a curved arm. In embodiments, the upper connecting portion comprises a curved plate.

Each upper hemispherical portion also comprises a pair of flanges. For example, the first upper hemispherical portion 112 comprises a pair of flanges 113. The second upper hemispherical portion 122 comprises a pair of flanges 123.

The lower section 150 comprises a first lower hemispherical portion 114, a second lower hemispherical portion 124, and a lower connecting portion 132.

The lower connecting portion comprises a pair of arms 132 comprising a 90-degree bend, each arm connecting the first lower hemispherical portion 114 to the second lower hemispherical portion 124.

Each lower hemispherical portion also comprises a pair of flanges. For example, the first lower hemispherical portion 114 comprises a pair of flanges 115. The second lower hemispherical portion 124 comprises a pair of flanges 125.

The first pair of hemispherical portions 112, 114 has an internal radius that is greater than the internal radius of the second pair of hemispherical portions 122, 124.

It can be seen that the upper section 140 and the lower section 150 are separable. The connection between the upper section 140 and the lower section 150 is provided by respective threaded member 116, 126. Each of the first upper flanges 113 and the first lower flanges 115 are arranged to align with each other when in the clamped configuration. Likewise, each of the second upper flanges 123 and the second lower flanges 125 are arranged to align with each other when in the clamped configuration.

The first pair of threaded members 116 passes through each of the first upper and lower flanges 113, 115. Each threaded member, in embodiments, comprises a nut 116 and a bolt 117. The first pair of threaded members 116 can be tightened or loosened by twisting the threaded member 116. By tightening the threaded member, the distance between first upper and lower flanges 113, 115 can be reduced, so that the first pair of hemispherical portions 112, 114 can be tightened around an external surface of a gear assembly when the fixture assembly is being deployed in the clamped configuration.

The second pair of threaded members 126 passes through each of the second upper and lower flanges 123, 125. The second pair of threaded members 126 can be tightened or loosened by twisting the threaded member 126. By tightening the threaded member 126, the distance between second upper and lower flanges 123, 125 can be reduced, so that the second pair of hemispherical portions 122, 124 can be tightened around an external surface of a pneumatic motor when the fixture assembly is being deployed in the clamped configuration.

By loosening the first pair of threaded members 116, the distance between the first upper and lower hemispherical portions 112, 114 is increased, removing the gear assembly from frictional engagement with the fixture assembly. By loosening the second pair of threaded members 126, the distance between the second pair of hemispherical portions 122, 124 is increased, removing the pneumatic motor from frictional engagement with the fixture assembly, so that the pneumatic motor can be decoupled from the gear assembly. This loosening of either or both of the pairs of threaded members 116, 126 transitions the fixture assembly from the clamped to the unclamped configuration.

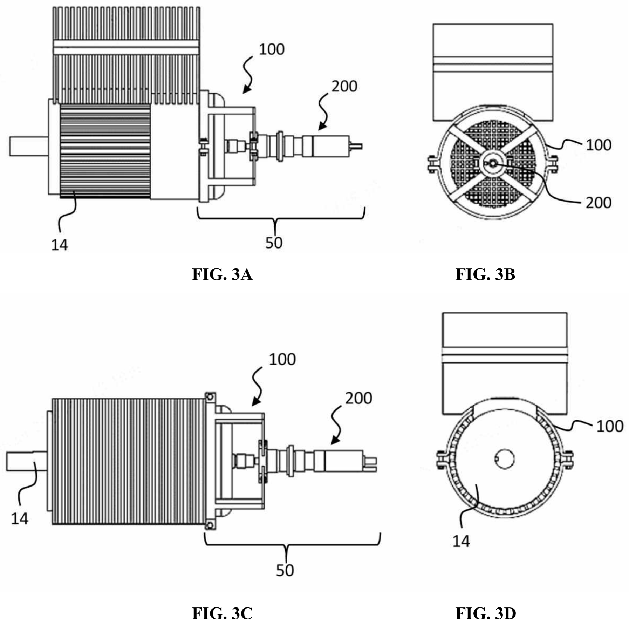

**Fig. 3A** shows a side view of a rotor turning apparatus in the clamped configuration according to an embodiment of the present disclosure.

**Fig. 3B** shows a front view of a rotor turning apparatus in the clamped configuration according to an embodiment of the present disclosure.

**Fig. 3C** shows a plan view of a rotor turning apparatus in the clamped configuration according to an embodiment of the present disclosure.

**Fig. 3D** shows a rear view of a rotor turning apparatus in the clamped configuration according to an embodiment of the present disclosure.

The embodiments shown in **Figs. 3A-3D** are two-dimensional views of the perspective view shown in **Fig. 1B****.** For the sake of conciseness, duplicate information will not be repeated when already described in relation to earlier figures, in particular in relation to **Fig. 1B****.** Like reference numerals denote similar features. The rotor turning apparatus 50 is shown comprising the fixture assembly 100 and the pneumatic motor 200, which is in the clamped configuration with the pneumatic motor coupled to the gear assembly 14, so that by feeding pressurized air into the pneumatic motor, the rotor of the STG is turned via the gear assembly 14. In the clamped configuration, the respective hemispherical portions of the fixture assembly 200 are clamped tightly against external surfaces of the gear assembly 14 and the pneumatic motor 200 respectively, holding them in frictional engagement, thereby securing the coupling between the pneumatic motor and the gear assembly, preventing relative movement between the gear assembly, the fixture assembly, and the pneumatic motor.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents. The disclosures and the description herein are intended to be illustrative and are not in any sense limiting the present disclosure, defined in scope by the following claims.

Many changes, modifications, variations and other uses and applications of the present disclosure will become apparent to those skilled in the art after considering this specification and the accompanying drawings, which disclose the preferred embodiments thereof. All such changes, modifications, variations and other uses and applications, which do not depart from the spirit and scope of the present disclosure, are deemed to be covered by the invention, which is to be limited only by the claims which follow.

## Claims

1. A rotor turning apparatus for turning a rotor of a steam turbine generator, the apparatus comprising:
a pneumatic motor; and
a fixture assembly, the fixture assembly comprising:
a first clamp, the first clamp comprising a first pair of hemispherical portions; and
a second clamp, the second clamp comprising a second pair of hemispherical portions;
wherein an inner radius of the first pair of hemispherical portions is sized so that an inner surface of the first clamp is configured to frictionally engage with an outer surface of a gear assembly of a steam turbine generator, when the fixture assembly is in a clamped configuration;
wherein an inner radius of the second pair of hemispherical portions is sized so that an inner surface of the second clamp is configured to frictionally engage with an outer surface of the pneumatic motor, when the fixture assembly is in the clamped configuration; and
wherein when the fixture assembly is in the clamped configuration, the pneumatic motor is mechanically coupled to the gear assembly of the steam turbine generator, such that the pneumatic motor is able to turn a rotor of the steam turbine generator via the gear assembly.

2. The apparatus according to claim 1, wherein the pneumatic motor is configured to turn a shaft of the rotor of the steam turbine generator, via the gear assembly.

3. The apparatus according to claim 1, wherein the pneumatic motor comprises a flexible air hose, wherein the flexible air hose facilitates the transport of air to the pneumatic motor.

4. The apparatus according to claim 1, wherein the pneumatic motor is configured to turn the rotor of the steam turbine generator at a rotation speed of between 0 and 16 revolutions per minute (rpm).

5. The apparatus according to claim 1, wherein the pneumatic motor comprises a pressure regulator.

6. The apparatus according to claim 3, wherein the pneumatic motor comprises an air compressor connected to a first end of the flexible hose, and wherein the pneumatic motor is connected to a second end of the flexible hose.

7. The apparatus according to claim 1, wherein the fixture assembly comprises a connecting portion,
wherein the connecting portion fixedly connects an upper hemispherical portion of the first pair of hemispherical portions and an upper hemispherical portion of the second pair of hemispherical portions.

8. The apparatus according to claim 7, wherein the connecting portion is an upper connecting portion, and wherein the fixture assembly comprises a lower connecting portion,
wherein the lower connecting portion rigidly connects a lower hemispherical portion of the first pair of hemispherical portions and a lower hemispherical portion of the second pair of hemispherical portions.

9. The apparatus according to claim 8, wherein one or both of the upper connecting portion or the lower connecting portion comprises a connecting arm.

10. The apparatus according to claim 9, wherein each of the upper connecting portion and the lower connecting portion comprise a plurality of connecting arms.

11. The apparatus according to claim 8, wherein the upper hemispherical portion of the first pair of hemispherical portions, the upper hemispherical portion of the second pair of hemispherical portions, and the upper connecting portion, form an upper section of the fixture assembly;
wherein the lower hemispherical portion of the first pair of hemispherical portions, the lower hemispherical portion of the second pair of hemispherical portions, and the lower connecting portion, form a lower section of the fixture assembly; and
wherein the upper section of the fixture assembly and the lower section of the fixture assembly are movable relative to each other.

12. The apparatus according to claim 11, wherein each hemispherical portion comprises a pair of flanges.

13. The apparatus according to claim 12, wherein the pair of flanges of the upper hemispherical portion of the first pair of hemispherical portions is arranged to align with the pair of flanges of the lower hemispherical portion of the first pair of hemispherical portions,
wherein the first pair of hemispherical portions comprises a pair of threaded members, each threaded member being arranged to pass through each of the aligned flanges, such that the fixture assembly can be moved between the clamped configuration and an unclamped configuration.

14. The apparatus according to claim 13, wherein the pair of flanges of the upper hemispherical portion of the second pair of hemispherical portions is arranged to align with the pair of flanges of the lower hemispherical portion of the second pair of hemispherical portions,
wherein the second pair of hemispherical portions comprises a pair of threaded members, each threaded member being arranged to pass through each of the aligned flanges, such that the fixture assembly can be moved between the clamped configuration and the unclamped configuration.

15. A method of turning a rotor of a steam turbine generator, the method comprising:
tightening a first pair of hemispherical portions of a fixture assembly towards frictional engagement with an outer surface of a gear assembly of the steam turbine generator, wherein the gear assembly is coupled to the rotor of the steam turbine generator;
coupling a pneumatic motor to the gear assembly;
tightening a second pair of hemispherical portions of the fixture assembly towards frictional engagement with an outer surface of the pneumatic motor, such that the pneumatic motor is spatially fixed relative to the gear assembly; and
feeding compressed air through the pneumatic motor coupled to the gear assembly, thereby causing the rotor of the steam turbine generator to turn.
